Europäisches Patentamt

European Patent Office

Office européen des brevets

(19)

(11) Numéro de publication : **0 369 904 B1**

(12)                    **FASCICULE DE BREVET EUROPEEN**

(45) Date de publication du fascicule du brevet :
10.06.92 Bulletin 92/24

(51) Int. Cl.⁵ : **A01K 89/01**

(21) Numéro de dépôt : **89420441.1**

(22) Date de dépôt : **15.11.89**

(54) **Moulinet de pêche à commande d'arceau perfectionnée.**

(30) Priorité : **17.11.88 FR 8815207**

(43) Date de publication de la demande :
**23.05.90 Bulletin 90/21**

(45) Mention de la délivrance du brevet :
**10.06.92 Bulletin 92/24**

(84) Etats contractants désignés :
**GB IT**

(56) Documents cités :
**DE-B- 2 852 934**
**US-A- 4 747 559**

(73) Titulaire : **MITCHELL SPORTS**
**30, rue de Messy**
**F-74300 Cluses (FR)**

(72) Inventeur : **Ruin, Jean**
**En Bud Thyez**
**F-74300 Cluses (FR)**

(74) Mandataire : **de Beaumont, Michel**
**Cabinet Poncet 7, chemin de Tillier B.P. 317**
**F-74008 Annecy Cédex (FR)**

## Description

La présente invention concerne les moulinets de pêche à lancer du type dit à bobine ou tambour fixe.

Les moulinets de pêche à bobine fixe comprennent une bobine à axe longitudinal montée sur le corps de moulinet et sollicitée par des moyens interdisant sa rotation autour de son axe par rapport au corps de moulinet pendant les étapes de récupération du fil. Un récupérateur est monté rotatif selon l'axe de la bobine, et est sollicité par un mécanisme d'entraînement en rotation. Le récupérateur comporte une partie externe déportée latéralement à l'extérieur de la bobine et se développant de l'arrière vers l'avant de la bobine, la partie externe de récupérateur portant un arceau de récupérateur monté à pivotement entre une position fermée et une position ouverte. En position fermée, l'arceau de récupérateur occupe une position transversale au voisinage de la réserve de fil de la bobine pour guider le fil de pêche et l'enrouler autour de la bobine lors de la rotation du récupérateur actionné par la manivelle. En position ouverte, l'arceau est escamoté latéralement pour libérer le fil de pêche, et permettre le lancer.

Dans les moulinets décrits dans le document DE-A-2 852 934, l'arceau de récupérateur est rappelé par l'action d'un ressort de torsion vers sa position fermée et peut être verrouillé en position ouverte. En outre, un système de déclenchement ramène automatiquement l'arceau de sa position ouverte vers sa position fermée lorsque l'utilisateur actionne le récupérateur en rotation autour de son axe, par exemple pour enrouler le fil de pêche sur la bobine après une étape de lancer.

Le document US-A-4 747 559 décrit un moulinet dans lequel l'arceau de récupérateur est rappelé soit en position fermée soit en position ouverte par un ressort de compression, guidé dans un tube pivotant, coopérant avec une bielle articulée sur un disque de récupérateur. Un levier permet en outre l'ouverture manuelle de l'arceau de récupérateur.

Dans ces moulinets connus, le système de déclenchement automatique de l'arceau de récupérateur nécessite l'utilisation de pièces mécaniques relativement nombreuses et complexes, et leur montage lors de l'assemblage du moulinet est relativement laborieux.

La présente invention a pour objet de proposer un nouvel agencement de l'ensemble de déclenchement, permettant une réduction importante du coût de réalisation de cette fonction de déclenchement, en diminuant le nombre de pièces nécessaires et en simplifiant leur réalisation. En outre, les opérations de montage lors de la fabrication du moulinet sont considérablement facilitées, et ne requièrent aucune habileté particulière des opérateurs. Le montage peut être effectué par des moyens uniquement manuels.

Les moyens mis en oeuvre selon l'invention pour obtenir cette réduction de coût sont en outre particulièrement adaptés à la structure habituelle des moulinets, ne bouleversant pas les habitudes des pêcheurs, respectant l'ergonomie, ne provoquant pas un surdimensionnement gênant, ne perturbant pas les fonctions habituelles du moulinet.

Pour atteindre ces buts ainsi que d'autres, le moulinet selon la présente invention est doté d'un système de déclenchement perfectionné dans lequel :

– un levier de système de déclenchement comprend un premier bras s'étendant transversalement entre une première extrémité de levier et une portion intermédiaire de levier ;

– le levier de système de déclenchement est monté oscillant, selon une zone intermédiaire de premier bras, autour d'un pivot fixe de levier, solidaire du récupérateur, sensiblement parallèle à l'axe de rotation de l'arceau de récupérateur ;

– la première extrémité du levier est solidaire de l'extrémité d'un tube de guidage contenant le ressort de maintien de l'arceau de récupérateur;

– le levier comprend une seconde extrémité qui est maintenue solidaire de la paroi latérale du tube de guidage pendant au moins une partie du mouvement de rotation du levier au voisinage de la position ouverte ;

– la portion intermédiaire du levier comprend un doigt radial dont l'extrémité libre est sollicitée par une rampe de corps de moulinet, pour le rappel de l'arceau de récupérateur vers sa position fermée lors de la rotation du récupérateur.

Selon un premier mode de réalisation, le levier et le tube de guidage sont deux pièces distinctes, articulées l'une à l'autre par la première extrémité de levier et l'extrémité postérieure du tube de guidage, la seconde extrémité du levier étant maintenue en appui contre le tube de guidage par l'effet du couple exercé sur le levier par le ressort et le tube de guidage.

Selon une variante, l'articulation entre la première extrémité du levier et le tube de guidage est constituée d'un évidement ménagé à l'extrémité du levier, évidement dans lequel vient s'insérer une tête sphérique ménagée à l'extrémité du tube de guidage.

Selon un second mode de réalisation, le levier et le tube de guidage sont totalement solidaires l'un de l'autre, par exemple réalisés en une seule et même pièce.

De préférence, le pivot du levier est un ergot cylindrique solidaire du levier, et se logeant dans un trou cylindrique correspondant du récupérateur.

Le levier est avantageusement inséré dans un logement comportant deux parois perpendiculaires à son pivot de rotation et interdisant la translation axiale du levier le long de son pivot ; le tube de guidage est lui-même guidé par les mêmes deux parois. De préférence, l'une des deux parois du logement est une paroi rapportée après montage des pièces mécaniques dans le logement, de sorte que ledit montage est simple et rapide.

D'autres objets, caractéristiques et avantages de la présente invention ressortiront de la description suivante d'un mode de réalisation particulier, faite en relation avec les figures jointes, parmi lesquelles :

– la figure 1 est une vue de côté d'un moulinet de type connu, l'arceau de récupérateur étant en position fermée ;

– la figure 2 est une coupe partielle selon le plan I - I de la figure 1;

– la figure 3 est une vue du moulinet de la figure 1 avec arceau de récupérateur en position ouverte ;

– la figure 4 est une vue de côté d'un moulinet selon la présente invention, arceau de récupérateur en position fermée ;

– la figure 5 est une coupe partielle du moulinet de la figure 4 selon le plan I - I ;

– la figure 6 est une vue de côté du moulinet de la figure 4, arceau de récupérateur en position ouverte ; et

– la figure 7 est une vue de côté d'un moulinet selon un second mode de réalisation de la présente invention.

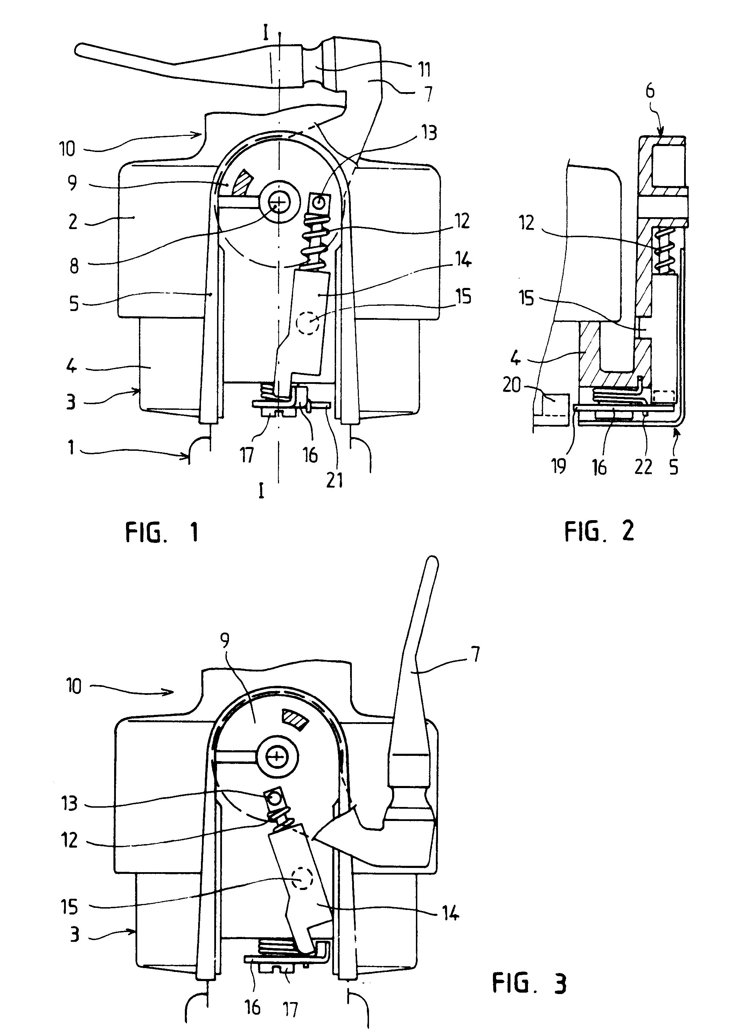

Pour faciliter la compréhension et les avantages procurés par la présente invention, on a représenté sur les figures 1 à 3, un moulinet de pêche connu de type à bobine ou tambour fixe.

Comme le représentent les figures, ce moulinet de type connu comprend un corps 1 sur lequel est montée une bobine 2 selon un axe longitudinal I - I. La bobine 2 est sollicitée par des moyens interdisant sa rotation autour de son axe longitudinal par rapport au corps de moulinet pendant les étapes de récupération du fil. Un récupérateur de fil 3 est monté rotatif sur le corps 1 selon l'axe I - I de la bobine, et peut être entraîné en rotation autour de son axe par un mécanisme d'entraînement en rotation non représenté sur les figures, comportant une manivelle actionnable par l'utilisateur. Le récupérateur comprend une base rotative 4, solidaire d'une partie externe 5 déportée latéralement à l'extérieur de la bobine 2 et se développant de l'arrière vers l'avant de la bobine, comme le représentent les figures. L'extrémité antérieure 6 de la partie externe de récupérateur porte un arceau de récupérateur 7, articulé sur l'extrémité 6 selon un axe de rotation radial 8, perpendiculaire à l'axe I - I de la bobine. L'arceau 7 comporte une base en forme de disque 9, le disque 9 tourillonnant sur l'axe 8.

L'arceau 7, et le disque 9 peuvent prendre une position dite fermée, représentée sur la figure 1, dans laquelle l'arceau occupe une position transversale au voisinage de la réserve de fil 10 de la bobine 2. L'arceau 7 et le disque 9 peuvent prendre une position dite ouverte, représentée sur la figure 3, dans laquelle l'arceau 7 est escamoté latéralement à l'écart de la bobine et libère le fil de pêche. En position fermée, représentée sur la figure 1, le fil de pêche passe dans une gorge 11 de l'arceau 7, et la rotation de l'arceau 7 entraîné par le récupérateur 3 et la manivelle provoque l'enroulement du fil de pêche dans la réserve de fil 10 de bobine. Lorsque l'arceau 7 est en position ouverte, le fil de pêche peut se dérouler librement hors de la réserve 10, permettant par exemple une opération de lancer.

Un mécanisme de maintien assure le maintien de l'arceau 7 dans l'une et l'autre des positions ouverte et fermée. Pour cela, le disque d'arceau 9 est sollicité par un ressort 12 de compression, dont la force se développe dans un plan sensiblement perpendiculaire à l'axe d'arceau 8 et est transmise au disque 9 en un pivot d'articulation 13. Le pivot 13 autorise un pivotement du ressort 12 par rapport au disque 9 selon un axe parallèle à l'axe d'arceau 8. Le pivot 13 est positionné sur le disque 9 en une position dite "intermédiaire", telle que le représentent les figures, c'est-à-dire disposée de telle manière que le couple de rotation du disque 9 autour de son axe 8 produit par l'effort du ressort 12 sur le pivot 13 s'annule et change de sens dans une position intermédiaire de la course circulaire comprise entre les deux positions ouverte et fermée de l'arceau 7. Ainsi, le couple produit par le ressort 12 tend à maintenir l'arceau dans la position choisie.

Pour éviter le flambage du ressort 12, celui-ci est partiellement contenu dans un tube borgne de guidage 14 avec un jeu suffisant pour autoriser la compression tout en interdisant le flambage du ressort. L'extrémité externe du ressort 12 est solidaire du pivot 13. L'extrémité interne du ressort 12 est en appui dans le fond du tube borgne de guidage 14. Le tube de guidage 14 est articulé sur le récupérateur 3 selon un pivot 15 parallèle à l'axe d'arceau. Les figures 1 et 3 montrent les deux positions extrêmes de pivotement du tube de guidage 14.

Dans cette forme connue de moulinet, le dispositif de déclenchement comprend un levier 16 monté pivotant sur le récupérateur 3 selon un axe longitudinal formé par une vis 17. Le levier comprend une première extrémité 19 destinée à entrer en contact avec une rampe 20 de déclenchement solidaire du corps 1 de moulinet, et une seconde extrémité 21 destinée à repousser le tube de guidage 14 vers sa position fermée représentée sur la figure 1, au-delà du point d'inversion du couple. Un ressort de rappel 22 sollicite le levier 16 pour le maintenir en appui contre le tube de guidage 14, évitant ainsi qu'il ne prenne lors de la rotation du récupérateur 3 une position quelconque susceptible de perturber le déclenchement et/ou qu'il ne produise un phénomène sonore désagréable.

Partant de la position ouverte représentée sur la figure 3, lorsque l'utilisateur actionne la manivelle pour entraîner le récupérateur 3 en rotation, la première extrémité 19 du levier 16 vient en appui sur la rampe 20 qui provoque le basculement du levier 16 vers sa position fermée représentée sur la figure 1. Dans cette position, la seconde extrémité 21 du levier fait basculer le tube de guidage 14 vers la position fermée, qui lui-même fait tourner le disque 9 et l'arceau 7 pour les amener en position fermée.

On conçoit que, dans ce moulinet connu, le mécanisme de déclenchement nécessite de prévoir un axe 15 de pivotement de tube de guidage 14, un levier de déclenchement 16, une vis 17 formant axe de rotation du levier 16, et un ressort de rappel 22. Le montage du dispositif est relativement malaisé, notamment du fait de la position axiale de la vis 17, et nécessite l'assemblage d'un nombre de pièces relativement important.

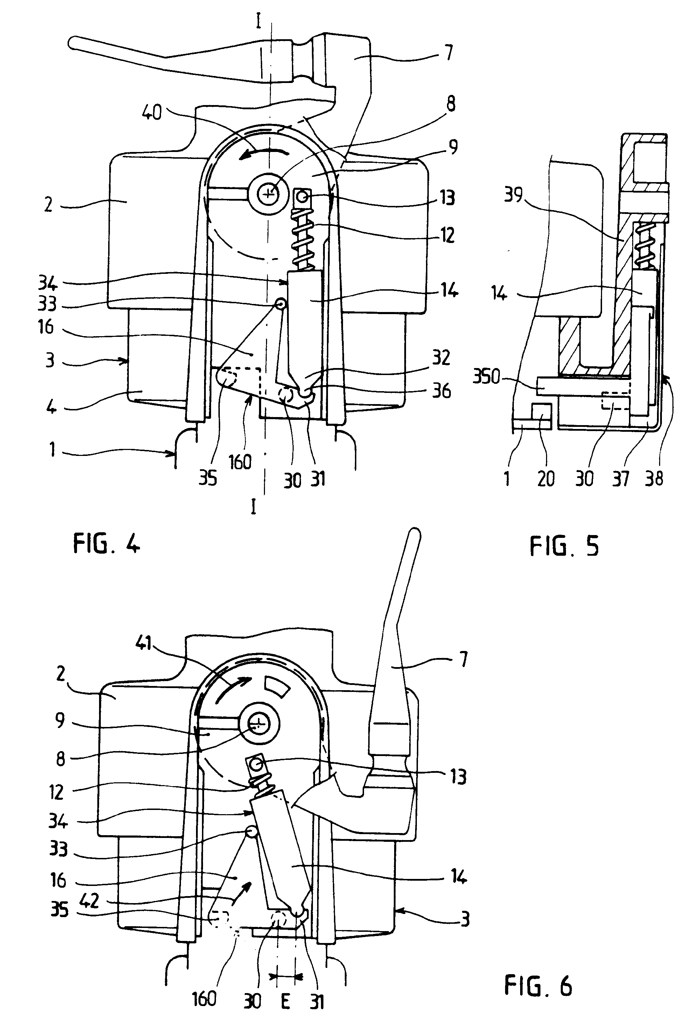

Le moulinet de la présente invention, représenté sur les figures 4 à 7, reprend les principaux organes fonctionnels du moulinet connu. Ces organes fonctionnels connus sont répertoriés sur les figures 4 à 7 avec les mêmes références numériques que sur les figures 1 à 3. Dans les modes de réalisation représentés sur les figures 4 à 7, les organes fonctionnels connus ont la même forme que les organes correspondants des moulinets connus des figures 1 à 3. Ces éléments identiques sont les suivants corps : de moulinet 1, bobine 2, base de récupérateur 4, partie externe 5 de récupérateur, arceau 7 avec son disque 9 tourillonnant sur un axe 8 disposé en extrémité 6 de la partie externe 5 de récupérateur, pivot 13 en position "intermédiaire" formant articulation en bout d'un ressort 12 guidé par une tube de guidage 14.

La différence réside dans la structure des moyens de déclenchement de récupérateur.

Dans le mode de réalisation des figures 4 à 7, le levier de déclenchement 16 comprend un premier bras 160 s'étendant selon une direction transversale sensiblement parallèle au plan du disque 9 d'arceau, entre une première extrémité 31 de levier et une portion intermédiaire 35 de levier. On entend par "direction transversale" une direction non parallèle au tube de guidage 14. Le levier de déclenchement 16 est monté oscillant, selon une zone intermédiaire de son premier bras 160, autour d'un pivot de levier 30 sensiblement parallèle à l'axe de rotation 8 du disque 9 d'arceau. Sa première extrémité 31 est articulée à l'extrémité postérieure 32 du tube de guidage 14. De cette manière, le levier 16 forme lui-même axe de pivotement du tube de guidage 14 par rapport au récupérateur, car le tube de guidage 14 n'est pas articulé directement sur le récupérateur. La seconde extrémité 33 du levier est en appui sur la paroi latérale 34 du tube de guidage 14, le levier ayant une forme générale en L comme le représentent les figures. De cette manière, le ressort 12 constitue d'une part organe de maintien de l'arceau 7 en position fermée ou ouverte, et simultanément organe de rappel du levier 16. On évite ainsi d'utiliser un ressort de rappel tel que le ressort 22 des figures 1 à 3. La portion intermédiaire 35 du levier comprend un doigt radial 350

sensiblement perpendiculaire au premier bras 160 et se développant vers l'intérieur du moulinet. L'extrémité libre du doigt radial 350 forme zone d'appui sollicitée par la rampe 20 du corps 1 de moulinet.

L'articulation entre la première extrémité 31 du levier 16 et le tube de guidage 14 est constituée d'un évidement ménagé à l'extrémité du levier, évidement dans lequel vient s'insérer une tête sphérique 36 ménagée à l'extrémité du tube de guidage 14.

Le pivot de levier 30 est un ergot cylindrique solidaire du levier 16, et se logeant dans un trou cylindrique correspondant du récupérateur 3.

Comme le représentent les figures, le levier 16 est inséré dans un logement 37, maintenu à faible jeu entre deux parois 38 et 39 perpendiculaires à son pivot 30, les deux parois 38 et 39 interdisant la translation du levier 16 dans l'axe de son pivot 30. Le tube de guidage 14 est lui-même également guidé par les mêmes deux parois 38 et 39. La paroi externe 38 est une paroi rapportée, que l'on adapte après montage des pièces mécaniques contenues dans le logement 37.

Le fonctionnement est le suivant : en position fermée, représentée sur la figure 4, le pivot 13 est à droite de l'axe de rotation 8 du disque 9, de sorte que la pression exercée par le ressort 12 produit un couple dans le sens représenté par la flèche 40, maintenant le disque 9 et l'arceau 7 en position fermée. Lorsque l'arceau est position ouverte, représentée sur la figure 6, le pivot 13 se trouve à gauche de l'axe 8, de sorte que la pression exercée par le ressort 12 produit un couple dans le sens représenté par la flèche 41, maintenant le disque 9 et l'arceau 7 en position ouverte.

Au voisinage de la position ouverte, et pendant au moins une partie de la course de rotation du levier 16, le levier de déclenchement 16 est en appui sur le tube de guidage 14, d'une part par sa première extrémité 31, d'autre part par sa seconde extrémité 33. En effet, l'écart transversal E entre le pivot 30 de levier et sa première extrémité 31 produit, par la force axiale exercée par le ressort 12 et le tube de guidage 14, un couple de rotation du levier 16 dans le sens représenté par la flèche 42, maintenant la seconde extrémité 33 du levier 16 en appui contre la paroi 34 du tube de guidage 14. Il en résulte que le levier 16 suit les oscillations du tube de guidage 14, et le ressort 12 constitue par lui-même un moyen de rappel du levier de déclenchement 16.

Partant d'une position arceau ouvert, représentée en figure 6, lorsque l'utilisateur actionne la manivelle pour entraîner le récupérateur 3 en rotation, le doigt radial 350 de la partie intermédiaire 35 du levier de déclenchement 16 vient en appui contre la rampe 20 du corps de moulinet, ladite rampe 20 provoquant le basculement du levier 16 dans le sens représenté par la flèche 42, qui provoque lui-même par l'appui de sa seconde extrémité 33 le basculement du tube de guidage 14 vers sa position fermée représentée sur la figure 4, entraînant par la même occasion le disque et l'arceau 7 de récupérateur dans le sens représenté par la flèche 40.

On conçoit que l'appui de la seconde extrémité 33 sur la paroi latérale du tube de guidage 14 doit être assuré pendant toute la course de rotation entre la position ouverte du tube de guidage 14 représentée sur la figure 6 et au-delà de la position intermédiaire du tube de guidage 14 ou position dans laquelle le couple de rotation exercé par le ressort 12 sur le disque 9 s'inverse. Au-delà de la position intermédiaire, il n'est pas indispensable que la rotation du levier 16 se poursuive pour accompagner la rotation du tube de guidage 14. Ainsi, ce mode de réalisation des figures 4 à 6, dans lequel le tube de guidage 14 et le levier 16 sont deux pièces distinctes, permet de concevoir des moulinets dans lesquels la course de rotation du tube de guidage 14 est plus grande que la course de rotation du levier 16. Cette possibilité peut être avantageuse dans les moulinets dans lesquels le disque 9 présente une grande dimension par rapport à la longueur du tube de guidage 14, de sorte que le débattement angulaire du tube de guidage 14 est relativement important. Ce mode de réalisation permet en outre de réaliser le tube de guidage 14 en une matière différente de celle constituant le levier 16. Par exemple, le tube de guidage 14 peut être réalisé en une matière à faible coefficient de frottement, pour favoriser le glissement du ressort 12 dans le tube et le pivotement du tube 14 autour du pivot formé par la première extrémité 31 du levier 16 ; le levier 16 peut par contre être réalisé en un matériau mécaniquement résistant, pour supporter les contraintes mécaniques auxquelles il est soumis. Ce mode de réalisation présente en outre l'avantage de faciliter le montage du moulinet, l'introduction de deux pièces distinctes 14 et 16 dans le logement s'avérant plus rapide que l'insertion d'une pièce unique formant levier 16 et tube de guidage 14.

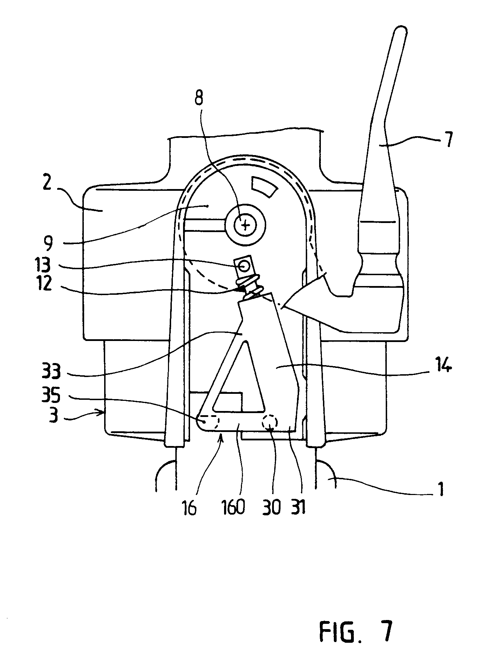

On peut toutefois concevoir, sans sortir du cadre de la présente invention, un second mode de réalisation, représenté sur la figure 7, dans lequel le tube de guidage 14 et le levier 16 sont totalement solidaires l'un de l'autre. Par exemple, on peut réaliser le tube de guidage 14 et le levier 16 en une seule et même pièce. La seule différence avec le mode de réalisation précédent, pour ce qui concerne le mode de fonctionnement, réside dans le fait que le tube de guidage 14 et le levier 16 sont alors nécessairement solidaires sur toute leur course de pivotement autour du pivot 30. Par ce mode de réalisation, on réalise l'économie d'une pièce.

La présente invention n'est pas limitée aux modes de réalisation qui ont été explicitement décrits, mais elle en inclut les diverses variantes et généralisations contenues dans le domaine des revendications ci-après.

## Revendications

1. Moulinet de pêche à bobine fixe, dans lequel :
– une bobine (2) à axe longitudinal (I - I) est montée sur le corps de moulinet (1) et sollicitée par des moyens interdisant sa rotation autour de son axe par rapport au moulinet pendant les étapes de récupération du fil,
– un récupérateur (3) est monté rotatif par sa base (4) selon l'axe (I - I) de la bobine et est sollicité par un mécanisme d'entraînement en rotation pendant les étapes de récupération du fil, le récupérateur comportant une partie externe (5) solidaire de la base, déportée latéralement à l'extérieur de la bobine et se développant de l'arrière vers l'avant de la bobine,
– un arceau (7) de récupérateur (3) est monté à pivotement par sa base en forme de disque (9) sur un axe (8) radial de l'extrémité antérieure (6) de la partie externe (5) de récupérateur entre une position fermée (figure 4) dans laquelle l'arceau (7) est en position transversale au voisinage de la réserve (10) de fil de la bobine pour guider le fil de pêche et l'enrouler autour de la bobine lors de la rotation du récupérateur (3), et une position ouverte (figure 6) dans laquelle l'arceau (7) est escamoté latéralement pour libérer le fil de pêche,
– le disque (9) d'arceau est sollicité par un ressort de compression (12) contenu partiellement dans un tube borgne de guidage (14) oscillant, l'extrémité externe du ressort (12) étant solidaire d'un pivot (13) de disque, l'extrémité interne du ressort (12) étant en appui dans le fond du tube borgne de guidage (14), le tube de guidage (14) étant sollicité par un organe solidaire du récupérateur pour le maintenir en appui contre le ressort (12), le pivot (13) de disque étant disposé sur le disque en une position intermédiaire de sorte que, dans l'une et l'autre des positions ouverte ou fermée de l'arceau de récupérateur, la force d'appui du ressort (12) sur le disque (9) produit un couple de rotation du disque autour de son axe (8) tendant à maintenir l'arceau (7) dans sa position choisie,
– un système de déclenchement, comprenant un levier (16) pivotant autour d'un pivot fixe du récupérateur, sollicite latéralement le tube de guidage (14) pour provoquer la rotation du disque (9) d'arceau et le rappel de l'arceau (7) de la position ouverte vers sa position fermée lorsque l'utilisateur actionne le récupérateur en rotation autour de son axe pour enrouler le fil de pêche après une étape de lancer, le levier (16) étant alors sollicité par une rampe (20) du corps (1) de moulinet, caractérisé en ce que :
– le levier (16) du système de déclenchement comprend un premier bras (160) s'étendant selon une direction transversale sensiblement parallèle au plan du disque (9) d'arceau, entre une première extrémité (31) de levier et une portion intermédiaire (35) de levier,

– le levier (16) est monté oscillant selon une zone intermédiaire de premier bras autour d'un pivot de levier (30) sensiblement parallèle à l'axe de rotation (8) du disque (9) d'arceau,

– la première extrémité (31) du levier (16) est solidaire de l'extrémité postérieure (32) du tube de guidage (14),

– le levier (16) comprend une seconde extrémité (33) qui est maintenue solidaire de la paroi latérale (34) du tube de guidage (14) pendant au moins une partie du mouvement de rotation du levier (16) au voisinage de la position ouverte, de sorte que le tube de guidage (14) et le levier (16) pivotent ensemble autour du pivot de levier (30) lors de la rotation du disque (9) d'arceau, pendant au moins une partie du mouvement de rotation du levier (16) au voisinage de la position ouverte,

– la portion intermédiaire (35) du levier (16) comprend un doigt radial (350) sensiblement perpendiculaire au premier bras (160) et se développant vers l'intérieur du moulinet, l'extrémité libre du doigt radial étant sollicitée par la rampe (20) de corps de moulinet pour provoquer le pivotement du levier (16), du tube de guidage (14) et de l'arceau (7) vers la position fermée.

2. Moulinet selon la revendication 1, caractérisé en ce que :

– le tube de guidage (14) et le levier (16) sont deux pièces distinctes,

– la première extrémité (31) du levier (16) est articulée à l'extrémité postérieure (32) du tube de guidage (14),

– la seconde extrémité (33) du levier (16) est disposée en regard de la face latérale du tube de guidage (14) contre laquelle elle vient en appui par l'effet du couple (42) exercé par le ressort (12) et le tube de guidage (14) sur le levier (16).

3. Moulinet selon la revendication 1, caractérisé en que l'articulation entre la première extrémité (31) du levier (16) et le tube de guidage (14) est constituée d'un évidement ménagé à l'extrémité du levier (16), évidement dans lequel vient s'insérer une tête sphérique (36) ménagée à l'extrémité du tube de guidage (14).

4. Moulinet selon la revendication 1, caractérisé en ce que le tube de guidage (14) et le levier (16) sont totalement solidaires l'un de l'autre, constituant une seule et même pièce en rotation autour du pivot (30) de levier.

5. Moulinet selon l'une quelconque des revendications 1 à 4, caractérisé en ce que le pivot (30) du levier (16) est un ergot cylindrique solidaire du levier et se logeant dans un trou cylindrique correspondant du récupérateur (3).

6. Moulinet selon la revendication 5, caractérisé en ce que le levier (16) est inséré dans un logement (37) comportant deux parois (38, 39) perpendiculaires à son pivot (30) et interdisant la translation du levier (16) dans l'axe de son pivot, le tube de guidage (14) étant guidé par les mêmes deux parois (38, 39).

7. Moulinet selon la revendication 6, caractérisé en ce que la paroi externe (38) du logement (37) est une paroi rapportée, que l'on adapte après montage des pièces mécaniques contenues dans le logement (37).

## Claims

1. A fixed-spool type fishing reel in which:

– a spool (2) with a longitudinal axis (I-I) is mounted on the body of the reel (1) and is acted on by means preventing it from rotating around its axis relative to the reel during the line recovery stages,

– a recuperator (3) is mounted so as to rotate at its base (4) around the axis (I-I) of the spool and is acted on by a rotary drive mechanism during the line recovery stages, the recuperator comprising an external part (5) integral with the base, offset laterally towards the outside of the spool and running from the rear to the front of the spool,

– a bail arm (7) for the recuperator (3) is mounted so as to pivot by its disc-shaped base (9) around a radial axis (8) at the front end (6) of the outer part (5) of the recuperator between a closed position (Figure 4) in which the bail arm (7) is in a transverse position near to the line store (10) of the spool to guide the fishing line and wind it around the spool when the recuperator (3) is rotating, and an open position (Figure 6) in which the bail arm (7) is retracted laterally to release the fishing line,

– the disc (9) of the bail arm is acted on by a compression spring (12) contained partly within an oscillating guide tube (14) closed at one end, the outer end of the spring (12) being integral with a disc pivot (13), the inner end of the spring (12) resting inside the base of the guide tube (14) closed at one end, the guide tube (14) being acted on by an element integral with the recuperator in order to keep it resting against the spring (12), the disc pivot (13) being disposed on the disc in an intermediate position such that, in either the open or closed positions of the recuperator bail arm, the supporting force of the spring (12) on the disc (9) produces rotary torque in the disc around its axis (8) tending to keep the bail arm (7) in its selected position,

– a release system, comprising a lever (16) pivoting around a fixed pivot of the recuperator, acts laterally on the guide tube (14) to cause the bail arm disc (9) to rotate and the bail arm (7) to be drawn back from the open position to its closed position when the user activates the recuperator in rotation around its axis in order to wind in the fishing line after a casting stage, the lever (16) then being acted on by a vane (20) on the body (1) of the reel,
characterised in that:
– the lever (16) of the release system comprises a first arm (160) extending in a transverse direction, substantially parallel to the plane of the bail arm disc (9), between a first end (31) of the lever and an intermediate portion (35) of the lever,
– the lever (16) is mounted so as to oscillate over an intermediate zone of the first arm around a lever pivot (30) substantially parallel to the axis of rotation (8) of the bail arm disc (9),
– the first end (31) of the lever (16) is integral with the rear end (32) of the guide tube (14),
– the lever (16) comprises a second end (33) which is kept integral with the side wall (34) of the guide tube (14) during at least part of the rotary movement (16) close to the open position, such that the guide tube (14) and the lever (16) pivot together around the lever pivot (30) during the rotation of the bail arm disc (9), during at least part of the rotary movement of the lever (16) close to the open position,
– the intermediate portion (35) of the lever (16) comprises a radial pin (350) substantially perpendicular to the first arm (160) and pointing towards the inside of the reel, the free end of the radial pin being acted on by the vane (20) of the reel body so as to cause the lever (16), the guide tube (14) and the bail arm (7) to pivot towards the closed position.

2. A reel according to Claim 1, characterised in that:
– the guide tube (14) and the lever (16) are two distinct parts,
– the first end (31) of the lever (16) is articulated to the rear end (32) of the guide tube (14),
– the second end (33) of the lever (16) is disposed facing the side face of the guide tube (14) against which it rests by the effect of the torque (42) exerted by the spring (12) and the guide tube (14) on the lever (16).

3. A reel according to Claim 1, characterised in that the articulation between the first end (31) of the lever (16) and the guide tube (14) is composed of a recess provided at the end of the lever (16), into which recess a spherical head (36), provided at the end of the guide tube (14), is inserted.

4. A reel according to Claim 1, characterised in that the guide tube (14) and the lever (16) are totally integral with one another, constituting one and the same part rotating around the lever pivot (30).

5. A reel according to any of Claims 1 to 4, characterised in that the pivot (30) of the lever (16) is a cylindrical lug integral with the lever and being housed in a corresponding cylindrical hole in the recuperator (3).

6. A reel according to Claim 5, characterised in that the lever (16) is inserted into a housing (37) comprising two walls (38, 39) perpendicular to its pivot (30) and preventing the lever (16) from moving in the axis of its pivot, the guide tube (14) being guided by the same two walls (38, 39).

7. A reel according to Claim 6, characterised in that the outer wall (38) of the housing (37) is an added wall, which is fitted on after the mechanical parts contained in the housing (37) have been mounted.

**Patentansprüche**

1. Angelwinde mit fester Spule, in welcher:
– eine Spule (2) mit longitudinaler Achse (I-I) auf dem Körper der Winde (1) montiert ist, und durch Einrichtungen beaufschlagt wird, welche ihre Rotation um ihre Achse bezüglich der Winde während den Stufen des Einziehens der Leine verbindern,
– ein Einzieher (3) rotativ durch seine Basis (4) entlang der Achse (I-I) der Spule montiert ist, und durch einen Mitzug-mechanismus während den Stufen des Einziehens der Leine beaufschlagt wird, wobei der Einzieher einen externen mit der Basis einstückigen Teil (5) aufweist, und zwar außerhalb der Spule seitlich verschoben und sich vom Hinterteil der Spule zu ihrem Vorderteil erstrecken,
– ein Einzugs (3) -bügel (7) drehbar durch seine scheibenförmige Basis (9) auf einer radialen Achse (8) des vorderen Endes (6) des äußeren Teiles (5) des Einziehers montiert ist, und zwar zwischen einer geschlossenen Stellung (Figur 4), in welcher der Bügel (7) in einer transversalen Stellung in der Nähe des Leinenvorrats (10) der Spule ist, um die Angelleine zu führen und sie während der Rotation des Einziehers (3) um die Spule zu wickeln, und einer geöffneten Stellung (Figur 6), in welcher der Bügel (7) seitlich eingeklappt, um die Angelleine freizusetzen,
– die Bügelscheibe (9) durch eine Kompressionsfeder (12) beaufschlagt wird, welche zu einem Teil in einem blinden schwingenden Führungsrohr (14) enthalten ist, wobei das äußere Ende der Feder (12) einstückig ist mit einem Scheibendrehpunkt (13) und das innere Ende der Feder (12) gegen den Boden des blinden Führungsrohrs (14) gedrückt wird, wobei das Führungsrohr (14) durch ein mit dem Einzieher einstückiges Element beaufschlagt wird, um es gegen die Feder (12) gedrückt zu halten, wobei der Scheibendrehpunkt (13) auf der Scheibe in einer Zwischenstellung angeordnet ist, damit in der geöffneten oder geschlossenen Stellung des Einzugsbügels die Druckkraft der Feder (12) auf die Scheibe (9) ein Drehmoment der Scheibe um ihre Achse (8) erzeugt, welches dazu neigt, den Bügel (7) in seiner gewählten Stellung zu halten,

– ein Auslösesystem, welches einen sich um einen festen Drehpunkt des Einziehers drehenden Hebel (16) aufweist, das Führungsrohr (14) seitlich beaufschlagt, um die Rotation der Bügelscheibe (9) und die Rückstellung des Bügels (7) von der geöffneten Stellung zu der geschlossenen Stellung hervorzurufen, wenn der Benutzer die Rotation des Einziehers um seine Achse auslöst, um die Angelleine nach einer Wurfphase aufzuwickeln, wobei der Hebel (16) durch eine Rampe (20) des Windenkörpers (1) beaufschlagt wird,

dadurch **gekennzeichnet, daß:**

– der Hebel (16) des Auslösesystems einen ersten Arm (160) aufweist, welcher sich in einer transversalen Richtung genau parallel zur Ebene der Bügelscheibe (9) erstreckt, und zwar zwischen einem ersten Ende (31) des Hebels und einem Zwischenabschnitt (35) des Hebels,

– der Hebel (16) schwingend montiert ist, und zwar in einem Zwischenbereich des ersten Arms um einen Hebeldrehpunkt (30) genau parallel zu der Rotationsachse (8) der Bügelscheibe (9),

– das erste Ende (31) des Hebels (16) einstückig ist mit dem hinteren Ende (32) des Führungsrohres (14),

– der Hebel (16) ein zweites Ende (33) aufweist, welches mit der Seitenwand (34) des Führungsrohres (14) einstückig gehalten wird, während zumindest eines Teils der Rotationsbewegung des Hebels (16) in der Nähe der geöffneten Stellung, so daß das Führungsrohr (14) und der Hebel (16) sich zusammen während der Rotation der Bügelscheibe (9) um den Hebeldrehpunkt (30) drehen, und zwar während zumindest einem Teil der Rotationsbewegung des Hebels (16) in der Nähe der geöffneten Stellung,

– der Zwischenabschnitt (35) des Hebels (16) einen radialen Finger (350) genau senkrecht zu dem ersten Arm (160) aufweist, der sich zu dem Innenteil der Winde hin erstreckt, wobei das freie Ende des radialen Fingers durch die Rampe (20) des Windenkörpers beaufschlagt wird, um die Drehung des Hebels (16), des Führungsrohres (14) und des Bügels (7) zu der geschlossenen Stellung hin hervorzurufen.

2. Winde nach Anspruch 1, dadurch gekennzeichnet, daß:

– das Führungsrohr (14) und der Hebel (16) zwei unterschiedliche Teile sind,

– das erste Ende (31) des Hebels (16) am hinteren Ende (32) des Führungsrohres (14) mit einem Gelenk verbunden ist,

– das zweite Ende (33) des Hebels (16) mit Blick auf die Seitenfläche des Führungsrohres (14) angeordnet ist, gegen die es durch die Wirkung des Momentes (42) gedrückt wird, welches durch die Feder (12) und das Führungsrohr (14) auf den Hebel (16) ausgeübt wird.

3. Winde nach Anspruch 1, **dadurch gekennzeichnet**, daß das Gelenk zwischen dem ersten Ende (31) des Hebels (16) und dem Führungsrohr (14) aus einer Aussparung besteht, welche in das Ende des Hebels (16) eingearbeitet ist, wobei sich in sie ein sphärischer Kopf (36) einfügt, welcher am Ende des Führungsrohres (14) ausgebildet ist.

4. Winde nach Anspruch 1, dadurch gekennzeichnet, daß das Führungsrohr (14) und der Hebel (16) miteinander vollkommen einstückig sind und ein einziges und gleiches Teil darstellen, welches um den Hebeldrehpunkt (30) rotierbar ist.

5. Winde nach einem der Ansprüche 1-4, dadurch gekennzeichnet, daß der Drehpunkt (30) des Hebels (16) ein mit dem Hebel einstückiger zylindrischer Zapfen ist, welcher sich in ein entsprechendes zylindrisches Loch des Einziehers (3) einfügt.

6. Winde nach Anspruch 5, dadurch gekennzeichnet, daß der Hebel (16) in einen Unterbringungsraum (37) eingefügt ist, welcher zwei Wände (38, 39) aufweist, und zwar senkrecht zu seinem Drehpunkt (30), und welcher die Verschiebung des Hebels (16) in der Achse seines Drehpunkts verhindert, wobei das Führungsrohr (14) durch dieselben zwei Wände (38, 39) geführt wird.

7. Winde nach Anspruch 6, dadurch gekennzeichnet, daß die Außenwand (38) des Unterbringungsraums (37) eine zusammengesetzte Wand ist, die man nach dem Montieren der in dem Unterbringungsraum (37) enthaltenen mechanischen Teile anpaßt.

FIG. 1

FIG. 2

FIG. 3

FIG. 4

FIG. 5

FIG. 6

FIG. 7